# FASCICULE DE BREVET EUROPEEN

(11) **EP 1 333 654 B1**
(45) Date de publication et mention de la délivrance du brevet: **29.12.2004**
(21) Numéro de dépôt: 03354003.0
(22) Date de dépôt: 20.01.2003
(51) Int. Cl.: H04M 11/02, H04M 9/00

(54) **Portier d'immeuble et procédé pour son utilisation**
Tortelefon und Anwendungsverfahren dafür
Door phone and use method therefor

(30) Priorité: 22.01.2002 FR 0200753
(43) Date de publication de la demande: 06.08.2003
(73) Titulaire: Atral, 38926 Crolles (FR)
(72) Inventeur: Nauleau, Alain, 38330 Montbonnot Saint Martin (FR)
(74) Mandataire: Hecke, G.

(56) Documents cités:
- EP-A- 0 789 493
- EP-A- 0 822 699
- WO-A-00/35180
- DE-A- 19 637 731

## Description

### Domaine technique de l'invention

L'invention concerne un portier électrique d'immeuble comprenant :
- au moins deux postes de communication intérieurs,
- une platine de rue possédant des touches d'appel associées chacune à au moins un poste de communication intérieur, et
- des moyens de transmission entre la platine de rue et les postes de communication intérieurs.

### État de la technique

Un portier d'immeuble est, en général, destiné à des lieux d'habitation et plus particulièrement à des immeubles collectifs à plusieurs appartements. Il permet à un visiteur de signaler sa présence à l'entrée de l'immeuble et de communiquer avec un occupant de l'immeuble situé, par exemple, dans un des appartements de l'immeuble.

Les dispositifs actuellement utilisés comprennent des moyens de communication filaire ou radio entre une platine de rue située à l'extérieur de l'immeuble et des postes intérieurs de communication placés dans les lieux où se trouvent les occupants. La platine de rue comprend des moyens d'appel des occupants de l'immeuble. Les postes intérieurs de communication sont munis de moyens permettant de recevoir les appels provenant de la platine de rue ainsi que de moyens de communication avec le visiteur placé à l'extérieur de l'immeuble. Par ailleurs, ces portiers ou dispositifs d'interphonie peuvent notamment posséder des moyens de commande électrique d'ouverture de la porte de l'immeuble, un ordre de commande étant lancé à distance d'un poste intérieur de communication, qui peut être fixe ou mobile.

En pratique, les portiers utilisant exclusivement des moyens de communication filaire présentent des inconvénients notables notamment au moment de l'installation. En effet, le nombre de fils qu'il est nécessaire de placer entre un coffret de commande placé à proximité de la platine de rue et les appartements est proportionnel au nombre d'appartements ayant un poste intérieur de communication. On constate rapidement que le câblage pour l'installation d'un tel dispositif dans des immeubles devient coûteux et nécessite un temps d'installation non négligeable. Des solutions (EP-A-709998) proposent des dispositifs qui tendent à limiter le nombre de fils à disposer à l'intérieur de l'immeuble. Cependant demeure la nécessité de relier individuellement par un câble chaque poste intérieur de communication, placé respectivement dans chaque appartement. Dans le document WO-A-0035180, chaque poste intérieur, connecté par un fil à la platine de rue, comporte un poste fixe et un combiné portable communiquant entre eux par des signaux électromagnétiques.

D'autres solutions connues (EP-A-831634 et EP-A-789493), utilisant exclusivement des systèmes de communication radio, ont résolu les problèmes de câblage évoqués ci-dessus. Cependant, ces systèmes de communication radio étant de faible portée, ils ne permettent pas toujours d'établir une communication acceptable entre la platine de rue et chacun des appartements. En effet, compte tenu notamment de la présence de l'empilement successif de planchers ou de cloisons entre la platine de rue et les postes intérieurs de communication, les communications radio sont parfois interrompues ou très fortement atténuées.

### Objet de l'invention

L'invention a pour but d'écarter les inconvénients des dispositifs connus, en particulier de fournir un portier d'immeuble permettant de réduire le câblage nécessaire, tout en assurant une communication fiable entre la platine de rue et l'un quelconque des appartements.

Selon l'invention, ce but est atteint par un portier selon les revendications annexées et plus particulièrement par le fait que le portier d'immeuble comporte des coffrets radio et un coffret de commande, connecté par une liaison filaire à la platine de rue et connecté à l'ensemble des coffrets radio par un câble unique à au moins deux fils électriques, chaque coffret radio communiquant par liaison radio avec au moins deux postes intérieurs de communication associés à deux touches d'appel distinctes de la platine de rue, chaque poste intérieur de communication comportant des moyens de mémorisation d'un code d'identification de la touche d'appel associée et d'un code d'identification d'un coffret radio qui lui est associé.

L'invention concerne également un procédé d'utilisation comportant une phase d'apprentissage comportant :
- le placement en mode d'apprentissage d'un poste intérieur de communication
- l'attribution au coffret de commande d'un code d'adresse correspondant au code d'adresse de l'un des coffrets radio,
- l'activation d'une touche d'appel,
- l'envoi, par le coffret de commande, d'un message d'apprentissage comprenant le code d'adresse qui lui a été attribué et un code d'identification de la touche d'appel activée,
- l'envoi, par le coffret radio associé audit code d'adresse, d'un message radio d'apprentissage comprenant le code d'identification de la touche d'appel activée et un code d'identification dudit coffret radio,
- la mémorisation, par le poste intérieur de communication placé en mode d'apprentissage, des codes d'identification reçus et
- la mémorisation, par le coffret de commande, du code d'identification de la touche d'appel et du code d'adresse du coffret radio concerné.

Selon un développement de l'invention, le procédé d'utilisation comporte, en fonctionnement normal :
- lors de l'activation d'une touche d'appel de la platine de rue, l'envoi sur le câble électrique, par le coffret de commande, d'un message d'appel contenant un code d'identification de la touche d'appel ainsi que le code d'adresse d'un coffret radio associé contenus en mémoire dans le coffret de commande,
- l'émission, par le coffret radio correspondant au code d'adresse transmis dans le message d'appel, d'un message radio d'appel incluant à la fois un code d'identification dudit coffret radio et le code d'identification de la touche d'appel activée,
- la mise en veille des autres coffrets radio,
- la reconnaissance des codes d'identification transmis dans le message radio d'appel par au moins un poste de communication intérieur, contenant en mémoire les codes d'identification transmis, et l'activation d'un moyen de signalisation dudit poste.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
La figure 1 représente un bloc diagramme d'un portier d'immeuble suivant l'invention.
La figure 2 représente plus en détail un mode de réalisation particulier d'un bloc diagramme d'un coffret de commande d'un portier d'immeuble selon la figure 1.
La figure 3 représente plus en détail un mode de réalisation particulier d'un coffret de transmission radio d'un portier d'immeuble selon la figure 1.
La figure 4 représente plus en détail un mode de réalisation particulier d'un poste intérieur de communication d'un portier d'immeuble selon la figure 1.

### Description de modes particuliers de réalisation.

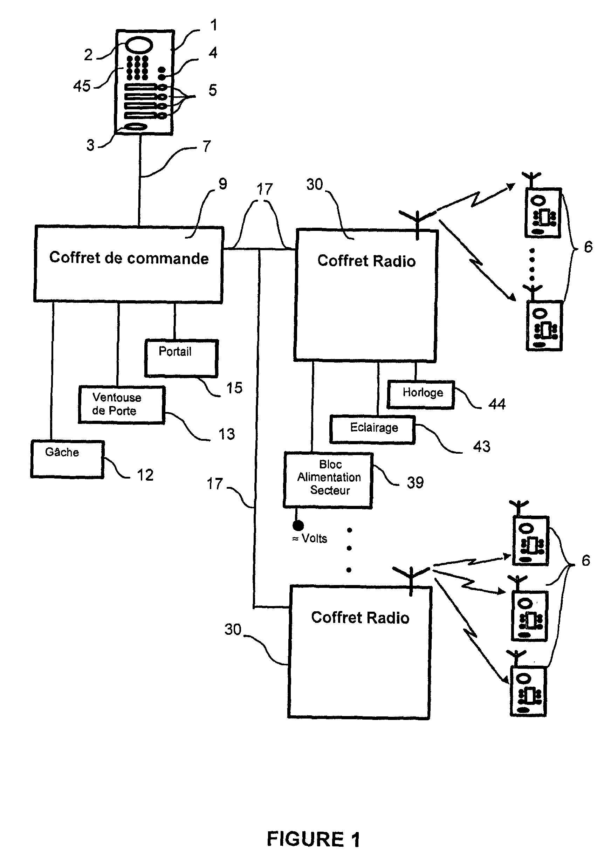

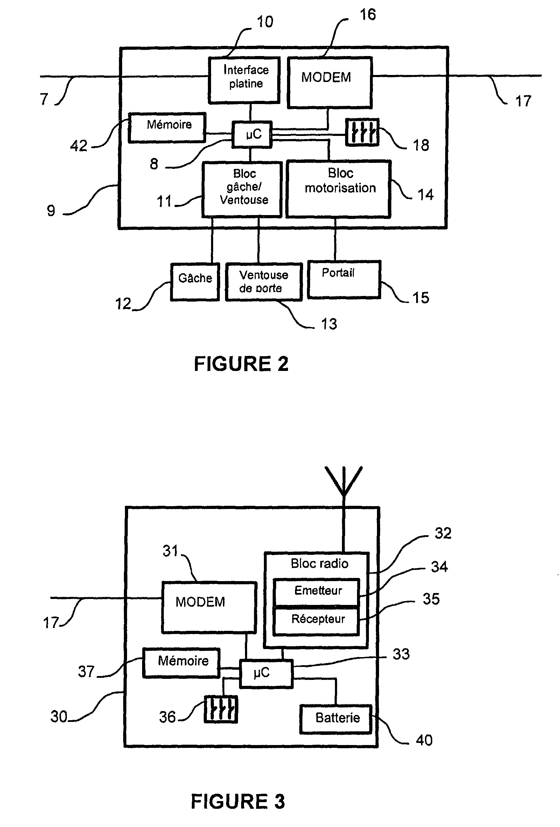

Sur la figure 1, on a représenté sous la forme d'un schéma synoptique l'ensemble des moyens techniques susceptibles d'être installés dans le portier d'immeuble. Le portier comporte, de manière habituelle, une platine de rue 1, placée à l'extérieur de l'immeuble et sur laquelle sont montés notamment un haut-parleur 2, un microphone 3, une touche 4 de commande d'ouverture de porte ou de portail ou de commande de gâche, des touches d'appel 5, correspondant respectivement aux postes intérieurs de communication 6 placés dans les appartements de l'immeuble. Chaque touche d'appel 5 possède individuellement un code d'identification, comprenant préférablement 8 bits. La platine de rue 1 est reliée par un câble 7 à un microcontrôleur 8 d'un coffret de commande 9, via une interface 10 (figure 2). Dans le mode de réalisation représenté, le câble 7 possède deux fils reliés respectivement au micro 3 et au haut-parleur 2 et deux fils servant à la transmission des ordres de commande, ainsi qu'à alimentation électrique de la platine de rue 1.

Comme représenté à la figure 2, le coffret de commande 9 est équipé de différents blocs de commande, notamment d'un bloc 11 de commande d'une gâche 12 ou d'une ventouse de porte 13 et d'un bloc 14 de commande pour la motorisation d'un portail 15. L'ensemble de ces blocs de commande est contrôlé par le microcontrôleur 8 du coffret de commande 9. Le microcontrôleur 8 est relié à un modem 16 capable de recevoir et d'envoyer des signaux sur un câble électrique 17 à au moins deux fils. Le modem 16 comprend traditionnellement des moyens d'émission et de réception de signaux audio, tels que la parole, ainsi qu'un moyen d'encodage capable de générer des ordres de commande sous forme de signaux binaires. Dans un mode de réalisation préféré, les ordres de commande envoyés et/ou reçus sont des signaux numériques à fréquence vocale, modulés en fréquence, appelés couramment signaux DTMF (« Digital Tone Modulation Frequency »). Le microcontrôleur 8 est également relié à des moyens d'adressage 18 capables de définir pour le coffret de commande un code d'adresse binaire appelé par la suite code d'adresse binaire d'interface DTMF. Cet adressage peut être réalisé notamment au moyen d'une roue codeuse ou d'interrupteurs ou au moment de la fabrication du coffret de commande en enregistrant de manière définitive ce code. Sur la figure 2, l'adressage est fait au moyen d'interrupteurs qui peuvent avantageusement être au nombre de trois.

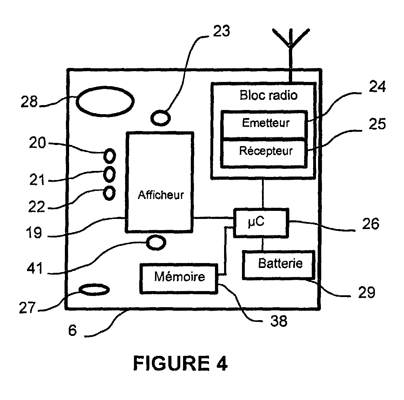

Des postes intérieurs de communication 6 sont placés dans différents lieux de l'immeuble, par exemple dans les appartements. Ces appartements sont respectivement équipés d'au moins un poste intérieur de communication 6. Comme représenté à la figure 4, un poste intérieur de communication 6 comporte, de manière habituelle, une alimentation électrique (batterie 29), un afficheur 19, un bouton 20 de commande de la ventouse d'une porte, un bouton 21 de commande d'ouverture d'un portail, un bouton 22 d'ouverture de gâche, une touche 23 de prise de ligne, un circuit d'émission 24 et un circuit de réception 25 de signaux radioélectriques audio ainsi que de signaux radioélectriques pour la commande d'ouverture notamment de la gâche ou du portail. Les circuits d'émission et de réception présentent en commun un microcontrôleur 26 capable de traiter l'ensemble des informations en provenance du coffret de commande ou en partance du poste intérieur de communication. Le circuit d'émission est connecté à un microphone 27 captant la voix d'un utilisateur et délivrant des signaux correspondants. Le circuit de réception est connecté à un haut-parleur 28 capable de restituer un signal audio. Dans le mode de réalisation représenté, l'alimentation électrique d'un poste intérieur de communication 6 peut être constituée soit d'un accumulateur (Lithium - Ion) rechargeable sur un bloc d'alimentation autonome possédant des piles non rechargeables, soit d'un accumulateur (Nickel - Cadmium ou Nickel - métaux hybrides) rechargeable sur alimentation secteur en tension alternative 220 Volts. L'autonomie d'un poste intérieur de communication 6 placé hors du bloc d'alimentation, est d'environ six jours.

Chaque poste intérieur de communication 6 communique avec la platine de rue via le coffret de commande 9 par l'intermédiaire d'un coffret radio 30. En effet, chaque poste intérieur de communication 6 communique avec un coffret radio 30 via une transmission radio. Par ailleurs, chaque coffret radio 30 communique avec le coffret de commande 9 au moyen du câble électrique 17, unique, à au moins deux fils. Dans un mode de réalisation préféré, le câble électrique 17 est un câble bifilaire. Ainsi, le câble électrique 17 relie le coffret de commande 9, placé généralement à proximité de la platine de rue 1, aux différents coffrets radio 30 répartis à l'intérieur de l'immeuble. Ce câble électrique 17, empruntant de préférence les gaines techniques déjà présentes dans l'immeuble, est utilisé pour la transmission des ordres de commande, la transmission de messages audio, ainsi que pour l'alimentation électrique des coffrets, coffrets radios 30 ou coffret de commande 9, qui ne sont pas reliés à un bloc d'alimentation.

Le portier d'immeuble comporte, dans sa configuration la plus simplifiée, au moins une platine de rue 1, un coffret de commande 9 relié à au moins un coffret radio 30, le coffret radio 30 pouvant entrer en communication avec au moins deux postes intérieurs de communication 6, placés respectivement dans deux appartements distincts, correspondant respectivement à deux touches d'appel 5 différentes de la platine de rue 1.

Un coffret radio 30 n'est pas relié à un seul poste intérieur de communication 6 mais dessert préférablement plusieurs postes intérieurs de communication. Si l'installation comporte plus de deux postes intérieurs 6 et que ces derniers ne peuvent pas recevoir les messages radio du premier coffret radio, l'installateur devra connecter d'autres coffrets radio afin de rendre possible la communication radio de chaque poste intérieur à un coffret radio. Selon la portée radio du coffret radio constatée au moment de l'installation, chaque coffret radio est placé judicieusement dans l'immeuble pour obtenir une liaison radio efficace entre ce dernier et le plus grand nombre de postes intérieurs de communication 6.

Plus généralement, pour être certain que tous les postes intérieurs de communication 6 peuvent communiquer avec la platine de rue 1, l'installateur doit placer en parallèle, sur l'unique câble électrique 17 relié au modem 16 du coffret de commande 9, un certain nombre de coffrets radio 30 répartis dans l'immeuble, afin que chaque poste intérieur de communication 6 puisse entrer en communication avec un de ces coffrets radio placés dans l'immeuble. L'installation optimisée consiste donc à placer un nombre minimum de coffrets radio dans le volume de l'immeuble, tous les postes intérieurs de communication pouvant communiquer avec un visiteur se trouvant à l'extérieur de l'immeuble. Suivant le type de matériaux utilisés pour la fabrication de l'immeuble, on peut envisager de placer avantageusement un coffret radio pour au moins deux étages d'un immeuble.

En se reportant à la figure 3, chaque coffret radio 30 possède un modem 31 et un bloc radio 32 connectés à un microcontrôleur 33. Le bloc radio 32 comporte des moyens d'émission 34 et de réception 35 des signaux radioélectriques respectivement reçus et émis par des moyens de réception 25 et d'émission 24 d'un ou de plusieurs postes intérieurs de communication 6. Le modem 31, comprenant des moyens d'émission et de réception de signaux audio tel que la parole, ainsi qu'un moyen d'encodage capable de générer des ordres de commande sous forme notamment de messages DTMF, est relié, d'une part, au microcontrôleur 33 du coffret radio 30 et, d'autre part, au coffret de commande 9 via le câble électrique 17.

Chaque coffret radio 30 possède un code d'adresse défini par des moyens d'adressage 36 capables de fixer pour ledit coffret un code d'adresse binaire appelé par la suite code d'adresse binaire d'interface DTMF. Cet adressage peut être réalisé notamment au moyen d'une roue codeuse ou d'interrupteurs. Sur la figure 3, l'adressage est fait au moyen d'interrupteurs qui peuvent avantageusement être au nombre de trois, ce qui représente une possibilité de programmation de un à sept codes binaires, attribuables respectivement à sept coffrets radio potentiels. Les trois interrupteurs de chaque coffret radio sont placés par l'installateur dans une configuration définitive de manière à ce que chaque coffret radio 30 possède un code d'adresse binaire d'interface DTMF unique constituée par un code binaire à trois chiffres. Ainsi, dans ce mode de réalisation particulier, le coffret de commande 9 peut reconnaître sept codes d'adresse binaires d'interface DTMF différents autrement dit sept coffrets radio différents.

En outre, chaque coffret radio 30 possède, dans une mémoire 37 connectée au microcontrôleur 33, un code d'identification radio exclusif attribué au moment de la fabrication dudit coffret. Dans un mode de réalisation préféré, le codage est réalisé sur 24 bits, ce qui permet d'éviter toute perturbation dans la reconnaissance du code d'identification radio notamment entre des installations de portier d'immeuble peu éloignées les unes des autres. En effet, un codage sur un plus petit nombre de bits ne permettrait pas d'attribuer à chaque coffret radio fabriqué un code d'identification sécurisé et exclusif ; un même code d'identification de coffret radio pourrait être reconnu et mémorisé par des postes intérieurs de communication n'appartenant pas à une même installation de portier d'immeuble.

Ce code d'identification radio sur 24 bits peut être reconnu et mémorisé par un nombre indéterminé de postes intérieurs de communication 6, dans une mémoire 38, connectée au microcontrôleur 26 du poste intérieur (figure 4).

Comme représenté à la figure 1, l'alimentation électrique de l'ensemble des coffrets radio 30, d'une part, et du coffret de commande 9, d'autre part, se fait, de préférence, par l'intermédiaire d'un seul bloc d'alimentation 39, disposé sur l'un desdits coffrets. Le bloc d'alimentation est, dans le mode de réalisation particulier représenté à la figure 1, relié avantageusement au premier coffret radio 30 connecté au câble électrique 17. Le bloc d'alimentation 39 est, de préférence, alimenté par la tension alternative du réseau de 220 Volts et la transforme, par exemple, en une tension continue de 24 Volts. Les coffrets 30 et 9 qui ne sont pas directement connectés au bloc d'alimentation 39 sont alimentés par l'intermédiaire du câble électrique 17, unique, reliant l'ensemble des coffrets radio 30 et de commande 9. Par ailleurs, chaque coffret dispose d'une batterie électrique 40 lui permettant de fonctionner temporairement en autonomie totale en cas de coupure du secteur au niveau du bloc alimentation 39.

Pour qu'un poste intérieur de communication 6 puisse communiquer avec un visiteur ayant appuyé sur la touche d'appel 5 de la platine de rue 1 correspondant à l'appartement où se trouve le poste intérieur de communication 6 considéré, le portier d'immeuble doit, au préalable, subir un procédé de double apprentissage. Ce double apprentissage consiste essentiellement, dans une première phase, à dédier chaque touche d'appel 5 de la platine de rue 1, via le coffret de commande 9, à un des coffrets radio 30 et, dans une seconde phase, à mémoriser, dans la mémoire 38 de chaque poste intérieur de communication 6 situé dans un appartement, à la fois le code d'identification radio d'un seul des coffrets radio (code à 24 bits) avec lequel il communiquera ultérieurement en exclusivité ainsi que le code d'identification de la touche d'appel 5 correspondant audit appartement (code de 8 bits).

Le procédé d'apprentissage se déroule, de préférence, de la manière suivante :
- Un poste intérieur de communication 6 est mis en mode d'apprentissage par l'intermédiaire d'une touche d'apprentissage 41 (figure 4).
- Les trois interrupteurs constituant les moyens d'adressage 18 du coffret de commande 9 sont placés dans la même configuration que les trois interrupteurs des moyens d'adressage 36 d'un des coffrets radio 30. Ainsi, le code d'adresse binaire d'interface DTMF à trois chiffres d'un des coffrets radio est identique à celui du coffret de commande 9.
- Une des touches d'appel 5 de la platine de rue 1, destinée à correspondre au poste intérieur de communication 6 mis en mode d'apprentissage, est activée.
- Le coffret de commande 9 envoie, par l'intermédiaire de son modem 16, un message d'apprentissage (signal DTMF) sur l'unique câble électrique 17. Le message d'apprentissage comprend le code d'identification (8 bits) de la touche d'appel 5 ainsi que ledit code d'adresse binaire d'interface DTMF à trois chiffres.
- Le coffret radio 30, qui reçoit le message envoyé par le coffret de commande et qui possède ledit code d'adresse binaire d'interface DTMF à trois chiffres, envoie, de préférence, en retour un message DTMF de validation au coffret de commande 9.
- Ledit coffret radio 30 envoie aussi, par radio, un message radioélectrique d'apprentissage. Le poste intérieur de communication 6, qui est en mode d'apprentissage, enregistre, dans sa mémoire 38, à la fois le code d'identification radio, sur 24 bits, du coffret radio ayant envoyé le message radio d'apprentissage et le code d'identification, sur 8 bits, de la touche de la platine de rue qui a été activée, soit au total 32 bits.
- Dès que le poste intérieur de communication 6, en mode d'apprentissage, a enregistré les deux codes (32 bits), il envoie en retour, par radio, un message radioélectrique de validation signalant que l'enregistrement des codes est réalisé.
- Lorsqu'il reçoit le message radioélectrique de validation, le coffret radio ayant envoyé le message radio d'apprentissage, envoie au coffret de commande 9 un second message de validation DTMF, spécifiant que le poste intérieur de communication 6 en mode d'apprentissage vient d'enregistrer respectivement le code d'identification de la touche d'appel de la platine de rue activée et le code d'identification du coffret radio qui lui est associé.
- Lorsqu'il reçoit le second message de validation, le coffret de commande 9 met en mémoire, dans une mémoire 42, connectée au microcontrôleur 8, l'association qui est faite entre le code d'identification de la touche de la platine de rue qui a été activée et le code d'adresse binaire d'interface DTMF du coffret radio concerné.

Le procédé d'apprentissage est alors fini pour le poste intérieur de communication considéré, qui est ainsi associé à la fois à une touche d'appel 5 et à un coffret radio 30. Le procédé d'apprentissage est reproduit pour chaque poste intérieur de communication 6. Le procédé d'apprentissage complet est terminé lorsque chaque touche d'appel 5 de la platine de rue 1 est reconnue par au moins un poste intérieur de communication 6. En dehors de la période d'apprentissage, le code d'adresse binaire d'interface DTMF des moyens d'adressage 18 du coffret de commande 9 est alors mis à zéro.

Au cours du processus d'apprentissage, s'il s'avère que la communication radio entre le poste intérieur de communication 6 en mode d'apprentissage et le coffret radio choisi ne peut s'établir, l'installateur modifie de manière appropriée l'emplacement du coffret radio ou rajoute un autre coffret radio.

Le nombre de postes intérieurs de communication 6 est au moins égal à deux et le code d'identification radio d'un coffret radio 30 est mémorisé par au moins deux postes intérieurs de communication et au moins deux touches d'appel 5 de la platine de rue 1 sont associées audit coffret radio.

En mode de fonctionnement dit normal (hors procédé d'apprentissage), lorsqu'une touche d'appel 5 de la platine de rue 1 est appuyée par un visiteur, le modem 16 du coffret de commande 9 envoie sur le câble électrique 17 un message d'appel DTMF contenant le code d'identification de ladite touche d'appel (8 bits) ainsi que le code d'adresse binaire d'interface DTMF du coffret radio associé. Ce message d'appel DTMF est reconnu par le coffret radio possédant ce code d'adresse binaire d'interface DTMF, qui a préalablement été associé au code d'identification de ladite touche d'appel de la platine de rue. Le coffret radio concerné envoie, de préférence, un message DTMF de confirmation au coffret de commande 9 et envoie, par ailleurs, un message radioélectrique d'appel possédant à la fois son propre code d'identification radio (24 bits) et le code d'identification (8 bits) de la touche d'appel 5 actionnée par le visiteur. Le poste intérieur de communication 6, qui possède en mémoire ces deux codes et qui les a identifiés, active un moyen de signalisation, par exemple une sonnerie ou un voyant.

Si personne ne répond à l'appel, le poste intérieur de communication n'étant pas décroché après un certain délai d'attente, la demande de communication est abandonnée. Un visiteur peut alors de nouveau appuyer sur une des touches de la platine de rue afin de joindre une personne de l'immeuble.

Si une personne située à l'intérieur de l'appartement où se produit la sonnerie, appuie sur la touche de prise de ligne 23 du poste intérieur, un message radio de confirmation est envoyé. Le coffret radio 30 associé, qui reçoit ce message radio de confirmation, envoie alors au coffret de commande 9, par le câble électrique 17, un message DTMF de confirmation, confirmant ainsi que le poste intérieur de communication 6 est à présent en attente d'une communication audio avec la platine de rue 1. La communication entre le visiteur et la personne à l'intérieur de l'immeuble peut alors avoir lieu. La communication entre le poste intérieur de communication et la platine de rue et réciproquement est de type à double accès (« full-duplex »), les deux personnes pouvant parler simultanément et s'entendre.

Le temps de communication peut avantageusement être limité à une durée de trois minutes afin de réduire la consommation électrique du dispositif. Par ailleurs, la communication peut prendre fin si le poste intérieur de communication 6 est raccroché ou si un ordre de commande, tel qu'un ordre d'ouverture du portail 15, de la ventouse de porte 13 ou de la gâche12 est envoyé au coffret de commande 9.

Pendant la communication entre un poste intérieur de communication 6 et la platine de rue 1, tous les modems 31 des autres coffrets radio 30, non concernés par la communication en cours, sont, de préférence, mis en veille et aucune commande des autres postes intérieurs de communication ne peut être transmise au coffret de commande. Ainsi, contrairement à certains portiers d'immeuble, il est possible d'assurer la confidentialité des communications en cours.

S'il n'existe aucune communication en cours, les postes intérieurs de communication 6 peuvent envoyer des ordres de commande qui seront exécutés par le coffret de commande 9 (notamment ordre d'ouverture du portail ou de la gâche).

Selon une variante de réalisation, la platine de rue 1 peut être intégrée dans le coffret de commande 9. Par ailleurs, l'ensemble des touches d'appel 5 de la platine de rue 1 peut être remplacé par un afficheur électronique ayant deux touches de défilement et une touche d'appel. Au moyen des deux touches de défilement, le visiteur choisit le nom de la personne de l'immeuble qu'il souhaite rencontrer, puis, une fois que le nom est affiché, il appuie sur l'unique touche d'appel ce qui déclenche la sonnerie du poste intérieur correspondant.

Selon une variante de réalisation (figure 1), un des coffrets radio 30 peut comporter une commande d'éclairage 43 d'une partie de l'immeuble, telle qu'un hall d'entrée ou une montée d'escalier. La commande d'éclairage peut notamment se faire par l'intermédiaire d'un relais basse tension. Le coffret radio possédant cette commande est préférablement reliée au bloc d'alimentation secteur 39. Une personne voulant commander l'éclairage à partir de son poste intérieur, peut le faire même si son poste intérieur de communication n'a pas mémorisé le code d'identification radio du coffret radio possédant la commande d'éclairage 43. Tous les postes intérieurs de communication peuvent ainsi commander l'éclairage. La commande d'éclairage est directe entre un poste intérieur de communication et ledit coffret radio si ledit poste intérieur a en mémoire l'adresse dudit coffret. Dans le cas contraire, la commande d'éclairage est indirecte. Le message de commande d'éclairage est alors, dans une première étape, transmis au coffret de commande 9, qui le fait suivre au coffret radio possédant la commande d'éclairage 43.

Selon une autre variante de réalisation, le coffret de commande 9 est équipé d'un moyen de pilotage à deux états, rattaché à la commande automatique de l'éclairage de l'immeuble. Dans l'un des états de pilotage, chaque ouverture de porte ou de portail ou chaque commande de gâche entraîne également la commande d'éclairage d'immeuble. Dans l'autre état de pilotage, une commande d'ouverture (porte, portail ou gâche) est sans conséquence sur la commande d'éclairage. Le choix de l'état de pilotage dudit moyen est choisi par l'installateur.

Selon une autre variante de réalisation (figure 1), un des coffrets radio 30 comporte une horloge interne programmable 44 permettant, notamment, de planifier pour l'ensemble du dispositif, les plages de fonctionnement et d'ouverture automatique de la commande de gâche. À la mise sous tension du coffret radio 30 possédant l'horloge 44, un message est envoyé au coffret de commande 9, indiquant l'état de programmation de l'horloge, de manière à lui permettre de commander de façon appropriée la gâche 12, le portail 15 et la ventouse de porte 13. Ce message est enregistré par le coffret de commande 9 si ce dernier est sous tension. Si le coffret de commande n'est pas sous tension, il interroge le coffret radio 30 possédant l'horloge 44 au moment de sa mise sous tension.

Au cours de certaines plages horaires de la journée correspondant traditionnellement aux heures ouvrables, l'utilisateur peut commander l'ouverture de la porte, du portail ou de la gâche au moyen de la touche de commande d'ouverture 4 de la platine de rue 1 dédiée à cet effet. Par contre, en dehors desdites plages horaires, cette touche 4 est inopérante.

Selon une autre variante de réalisation, la platine de rue 1 comporte un clavier numérique 45, grâce auquel une personne placée à l'extérieur de l'immeuble peut commander l'ouverture de la porte ou du portail ou commander la gâche en saisissant un code de 4 à 6 caractères numériques. Cette commande est opérationnelle à tout moment de la journée. Par ailleurs, cette commande de porte ou de portail peut aussi se faire à l'aide d'un transpondeur porté par une personne désirant entrer dans l'immeuble. Au moment du passage de la personne devant la platine de rue, le transpondeur est interrogé et reconnu par la platine de rue 1, ce qui déclenche l'ouverture de la porte ou du portail ou la commande de gâche.

Selon une autre variante de réalisation, un même appartement peut comporter plusieurs postes intérieurs de communication 6 qui, une fois le procédé d'apprentissage terminé, possèdent tous en mémoire les mêmes codes d'identification, c'est-à-dire celui du coffret radio 30 associé et celui de la touche d'appel 5 correspondant à l'appartement. Ainsi, lorsqu'un visiteur appuie sur la touche d'appel 5 correspondante, tous les postes intérieurs de communication de l'appartement concerné sonnent au même moment.

Selon une autre variante de réalisation, le nombre X d'interrupteurs des moyens d'adressage 18 et 36 disposés respectivement dans le coffret commande 9 et les coffrets radio 30, est supérieur à trois. Cette variante de réalisation représente une possibilité de programmation de 2^{x} codes d'adresse binaires d'interface DTMF attribuables respectivement à (2^{x}-1) coffrets radio potentiels. Ce nombre reste néanmoins normalement trop petit pour obtenir un code à 24 bits permettant d'écarter les problèmes dus aux influences extérieures lors d'une transmission radio.

Selon une autre variante de réalisation, l'alimentation électrique de l'ensemble des coffrets radio 30, d'une part, et du coffret de commande 9, d'autre part, se fait par l'intermédiaire de blocs d'alimentation 39 disposés respectivement sur chacun des coffrets. L'unique câble électrique 17 du portier n'est plus alors utilisé pour alimenter en tension les différents coffrets, mais uniquement pour la transmission des messages et des ordres de commande.

Le portier selon l'invention assure une simplification du câblage entre les postes intérieurs de communication 6 et la platine de rue 1 et réduit le nombre de moyens intermédiaires utiles à son bon fonctionnement. De plus, l'intervention de l'installateur à l'intérieur de chaque appartement n'est pas nécessaire. En effet, lors du processus d'apprentissage, l'installateur peut placer le poste intérieur de communication 6 en mode d'apprentissage en dehors de l'appartement (sur le palier par exemple). Les postes intérieurs sont remis aux utilisateurs après le processus d'apprentissage et disposés par ceux-ci dans tout emplacement désiré à l'intérieur de l'appartement. L'ensemble de ces améliorations permet un gain de temps au moment de l'installation et une réduction globale du coût intrinsèque du portier d'immeuble.

## Revendications

1. Portier électrique d'immeuble comprenant :
- au moins deux postes de communication intérieurs (6),
- une platine de rue (1) possédant des touches d'appel (5) associées chacune à au moins un poste de communication intérieur (6), et
- des moyens de transmission entre la platine de rue et les postes de communication intérieurs,
portier **caractérisé en ce qu'**il comporte des coffrets radio (30) et un coffret de commande (9), connecté par une liaison filaire (7) à la platine de rue (1) et connecté à l'ensemble des coffrets radio (30) par un câble unique (17) à au moins deux fils électriques, chaque coffret radio (30) communiquant par liaison radio avec au moins deux postes intérieurs de communication (6) associés à deux touches d'appel (5) distinctes de la platine de rue (1), chaque poste intérieur de communication (6) comportant des moyens (38) de mémorisation d'un code d'identification de la touche d'appel (5) associée et d'un code d'identification d'un coffret radio (30) qui lui est associé.

2. Portier selon la revendication 1, **caractérisé en ce que** chaque coffret radio (30) comporte des moyens d'adressage (36) définissant un code d'adresse du coffret.

3. Portier selon la revendication 2, **caractérisé en ce que** le coffret de commande (9) comporte des moyens d'adressage (18) définissant un code d'adresse et des moyens (42) de mise en mémoire du code d'identification d'une touche d'appel et du code d'adresse du coffret radio qui lui est associé.

4. Portier selon la revendication 3, **caractérisé en ce que** les moyens d'adressage (18) du coffret de commande (9) sont mis à zéro en dehors de périodes d'apprentissage.

5. Portier selon l'une quelconque des revendications 1 à 4, **caractérisé en ce que** chaque poste intérieur de communication (6) comporte des moyens (41) de mise en mode d'apprentissage.

6. Procédé d'utilisation d'un portier selon l'une quelconque des revendications 1 à 5, **caractérisé en ce qu'**il comporte une phase d'apprentissage comportant :
- le placement en mode d'apprentissage d'un poste intérieur de communication (6),
- l'attribution au coffret de commande (9) d'un code d'adresse correspondant au code d'adresse de l'un des coffrets radio (30),
- l'activation d'une touche d'appel (5),
- l'envoi, par le coffret de commande (9), d'un message d'apprentissage comprenant le code d'adresse qui lui a été attribué et un code d'identification de la touche d'appel (5) activée,
- l'envoi, par le coffret radio (30) associé audit code d'adresse, d'un message radio d'apprentissage comprenant le code d'identification de la touche d'appel activée et un code d'identification dudit coffret radio,
- la mémorisation, par le poste intérieur de communication (6) placé en mode d'apprentissage, des codes d'identification reçus, et
- la mémorisation, par le poste de commande (9), du code d'identification de la touche d'appel et du code d'adresse du coffret radio concerné.

7. Procédé selon la revendication 6, **caractérisé en ce que** le code d'adresse d'un coffret radio est un code à 3 chiffres, son code d'identification étant un code à 24 bits.

8. Procédé d'utilisation d'un portier selon l'une des revendications 6 et 7, **caractérisé en ce qu'**il comporte, en fonctionnement normal :
- lors de l'activation d'une touche d'appel (5) de la platine de rue (1), l'envoi sur le câble électrique (17), par le coffret de commande (9), d'un message d'appel contenant un code d'identification de la touche d'appel ainsi que le code d'adresse d'un coffret radio (30) associé contenus en mémoire (42) dans le coffret de commande(9),
- l'émission, par le coffret radio (30) correspondant au code d'adresse transmis dans le message d'appel, d'un message radio d'appel incluant à la fois un code d'identification dudit coffret radio et le code d'identification de la touche d'appel activée,
- la mise en veille des autres coffrets radio,
- la reconnaissance des codes d'identification transmis dans le message radio d'appel par au moins un poste de communication intérieur (6), contenant en mémoire (38) les codes d'identification transmis, et l'activation d'un moyen de signalisation dudit poste.

## Patentansprüche

1. Elektrisches Tortelefon, das umfasst:
- mindestens zwei interne Kommunikationsgeräte (6),
- eine Strassenplatte (1) mit Ruftasten (5), die jeweils zu einem der internen Kommunikationsgeräte (6) gehören, und
- Mittel für die Übertragung zwischen der Strassenplatte und den internen Kommunikationsgeräten (6),
Tortelefon **dadurch gekennzeichnet, dass** es Funkgehäuse (30) und einen Steuerkasten (9) umfasst, der über eine drahtgebundene Verbindung (7) mit der Strassenplatte (1) und mit allen Funkgehäusen (30) über ein einziges Kabel (17) mit mindestens zwei Elektrodrähten verbunden ist, wobei jedes Funkgehäuse (30) über eine Funkverbindung in Kontakt steht mit mindestens zwei internen Kommunikationsgeräten (6), die zwei verschiedenen Ruftasten (5) der Strassenplatte (1) zugeordnet sind, wobei jedes interne Kommunikationsgerät (6) Mittel zum Speichern (38) eines Identifikationscodes der ihm zugeordneten Ruftaste (5) und eines Identifikationscodes eines ihm zugeordneten Funkgehäuses (30) aufweist.

2. Tortelefon nach Anspruch 1, **dadurch gekennzeichnet, dass** jedes Funkgehäuse (30) Adressierungsmittel (36) umfasst, die einen Adresscode des Gehäuses definieren.

3. Tortelefon nach Anspruch 2, **dadurch gekennzeichnet, dass** der Steuerkasten (9) Adressierungsmittel (18), die einen Adresscode definieren, sowie Mittel (42) zum Speichern des Identifikationscodes einer Ruftaste und des Adresscodes des ihr zugeordneten Funkgehäuses umfasst.

4. Tortelefon nach Anspruch 3, **dadurch gekennzeichnet, dass** die Adressierungsmittel (18) des Steuerkastens (9) außerhalb von Lernphasen auf Null gestellt werden.

5. Tortelefon nach einem der Ansprüche 1 bis 4, **dadurch gekennzeichnet, dass** jedes interne Kommunikationsgerät (6) Mittel (41) zum Schalten in einen Lernmodus umfasst.

6. Anwendungsverfahren für ein Tortelefon nach einem der Ansprüche 1 bis 5, **dadurch gekennzeichnet, dass** es eine Lernphase einschließt, die umfasst:
- das Schalten eines internen Kommunikationsgeräts (6) in einen Lernmodus,
- die Zuweisung eines Adresscodes an den Steuerkasten (9), der dem Adresscode eines der Funkgehäuse (30) entspricht,
- die Aktivierung einer Ruftaste (5),
- die Übertragung einer Lernmeldung durch den Steuerkasten (9), die den ihm zugewiesenen Adresscode und einen Identifikationscode der aktivierten Ruftaste (5) umfasst,
- die Übertragung einer Funklernmeldung durch das diesem Adresscode zugeordnete Funkgehäuse (30), die den Identifikationscode der aktivierten Ruftaste und einen Identifikationscode dieses Funkgehäuses enthält,
- das Speichern der empfangenen Identifikationscodes in dem im Lernmodus befindlichen internen Kommunikationsgerät (6), und
- das Speichern des Identifikationscodes der Ruftaste und des Adresscodes des entsprechenden Funkgehaüses im Steuerkasten (9).

7. Verfahren nach Anspruch 6, **dadurch gekennzeichnet, dass** der Adresscode eines Funkgehaüses ein 3-Zahlen-Code und sein Identifikationscode ein 24-Bit-Code ist.

8. Anwendungsverfahren für ein Tortelefon nach einem der Ansprüche 6 und 7,
**dadurch gekennzeichnet, dass** es im Normalbetrieb umfasst:
- bei Aktivierung einer Ruftaste (5) der Strassenplatte (1) die Übermittlung einer Rufmeldung durch den Steuerkasten (9) über das Elektrokabel (17), die einen Identifikationscode der Ruftaste sowie den Adresscode eines zugehörigen Funkgehaüses (30) enthält, die im Speicher (42) des Steuerkastens (9) enthalten sind,
- die Übertragung einer Funkrufmeldung durch das Funkgehäuse (30), das dem Adresscode entspricht, der in der Rufmeldung übertragen wurde, die einen Identifikationscode des genannten Funkgehäuses sowie den Identifikationscode der aktivierten Ruftaste enthält,
- das Schalten der anderen Funkgehäuse in den Stand-by-Zustand,
- die Erkennung der in der Funkrufmeldung übertragenen Identifikationscodes durch mindestens ein internes Kommunikationsgerät (6), das in seinem Speicher (38) die übertragenen Identifikationscodes enthält, und die Aktivierung einer Meldevorrichtung dieses Geräts.

## Claims

1. Electric door phone comprising:
- at least two indoor communication units (6),
- a street keypad (1) having call buttons (5) each associated to at least one indoor communication unit (6), and
- transmission means between the street keypad and the indoor communication units,
door phone **characterized in that** it comprises radio boxes (30) and a control box (9) connected by a wired connection (7) to the street keypad (1) and connected to the set of radio boxes (30) by a single cable (17) with at least two electric wires, each radio box (30) communicating by radio link with at least two indoor communication units (6) associated to two distinct call buttons (5) of the street keypad (1), each indoor communication unit (6) comprising means for storing an identification code of the associated call button (5) and an identification code of a radio box (30) that is associated thereto.

2. Door phone according to claim 1, **characterized in that** each radio box (30) comprises addressing means (36) defining an address code of the box.

3. Door phone according to claim 2, **characterized in that** the control box (9) comprises addressing means (18) defining an address code and means (42) for storing the identification code of a call button and the address code of the radio box that is associated thereto.

4. Door phone according to claim 3, **characterized in that** the addressing means (18) of the control box (9) are reset outside learning periods.

5. Door phone according to any one of the claims 1 to 4, **characterized in that** each indoor communication unit (6) comprises means (41) for setting to learning mode.

6. Method for use of a door phone according to any one of the claims 1 to 5, **characterized in that** it comprises a learning phase comprising:
- placing an indoor communication unit (6) in learning mode,
- assigning an address code to the control box (9) corresponding to the address code of one of the radio boxes (30),
- activation of a call button (5),
- sending, by the control box (9), of a learning message comprising the address code that has been assigned thereto and an identification code of the activated call button (5),
- sending, by the radio box (30) associated to said address code, of a radio learning message comprising the identification code of the activated call button and an identification code of said radio box,
- storing of the identification codes received, by the indoor communication unit (6) placed in learning mode, and
- storing, by the control box (9), of the call button identification code and of the address code of the radio box involved.

7. Method according to claim 6, **characterized in that** the address code of a radio box is a 3-figure code, its identification code being a 24-bit code.

8. Method for use of a door phone according to one of the claims 6 and 7, **characterized in that** it comprises, in normal operation:
- on activation of a call button (5) of the street keypad (1), sending by the control box (9) via the electric cable (17) of a call message containing an identification code of the call button and the address code of an associated radio box (30) stored in memory (42) in the control box (9),
- transmission by the radio box (30) corresponding to the address code transmitted in the call message of a call radio message including both the identification code of said radio box and the identification code of the activated call button,
- placing the other radio boxes on standby,
- recognition of the identification codes transmitted in the call radio message by at least one indoor communication unit (6) containing the transmitted identification codes in memory (38), and activation of an indicating means of said unit.
